# EUROPEAN PATENT APPLICATION

(11) **EP 1 662 780 A2**
(43) Date of publication of application: **31.05.2006**
(21) Application number: 05110987.4
(22) Date of filing: 18.11.2005
(51) Int. Cl.: H04N 5/445

(54) **Display Apparatus and Method**

(30) Priority: 25.11.2004 KR 2004097686
(71) Applicant: Samsung Electronics Co., Ltd., Yeongtong-gu Suwon-city, Gyeonggi-do 442-742 (KR)
(72) Inventor: Lee, Jung-Bae, Hyosung Apt., Anyang-si, Gyeonggi-do (KR)
(74) Representative: Walaski, Jan Filip

(57) **Abstract**

A display apparatus and control method is disclosed. The display apparatus includes a first processor outputting a on-screen display (OSD) video signal, or a processed first video signal, including an OSD window; an OSD extractor extracting the OSD window from the OSD video signal and a second processor mixing an externally input second video signal and the OSD window extracted from the OSD extractor, and outputting the mixed signal. A display apparatus is thus provided which generates a uniform OSD window and reduces costs.

## Description

The present invention relates to display apparatus. Particularly, but not exclusively, the invention relates to a display apparatus and a corresponding control method in which a process of generating an on-screen display (OSD) is improved.

Generally, a display apparatus receives a video signal from a video signal source such as a video card, a TV card of a computer, etc., thereby displaying a picture on a screen. Recently, a display apparatus has been released onto the market, which displays a picture by receiving a video signal from various external signal sources such as a video tape recorder (VTR), a video camcorder, a set top box (STB) or the like.

The display apparatus comprises a processor to process the video signal received into a displayable format. Particularly, the display apparatus requires at least one processor to process various video signals received from various kinds of signal sources. Generally, the processor comprises an OSD block to provide a user with a selection menu through an OSD function.

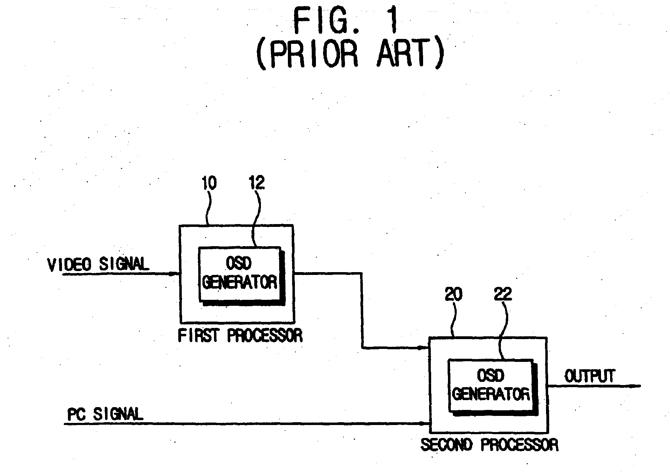

Figure 1 is a control block diagram of a conventional display apparatus. As shown therein, the display apparatus comprises a first processor 10 and a second processor 20.

The first processor 10 comprises an OSD generator 12. The first processor 10 receives a video signal and outputs the video signal to the second processor 20 after processing it.

The video signal refers to a video signal input from a VTR or a digital versatile disk (DVD) player, a standard definition (SD) video signal, or a high definition (HD) video signal. According to the input format, such video signals pass through an analog to digital (A/D) converting process or a decoding process to be processed as a displayable signal.

When an OSD generating signal is received while the first processor 10 processes the video signal input thereto, the OSD generator 12 generates an OSD signal. The OSD signal generated by the OSD generator 12 is mixed with the video signal processed by the first processor 10, and the mixed signal is then input to the second processor 20.

When the OSD generating signal is received while the second processor 20 processes the video signal input thereto, an OSD generator 22 generates an OSD signal. The OSD signal generated by the OSD generator 22 is mixed with the video signal processed by the second processor 20, and is then output to and displayed on a display part (not shown). The video signal transmitted from the first processor 10 to the second processor 20 may be completely processed in the first processor 10 and simply pass through the second processor 20, or it may be processed in the second processor 20 into a final displayable format. The second processor 20 may receive an input PC signal.

When the display apparatus comprising two or more processors receives the OSD generating signal, each of the processors processing the video signal generates an OSD signal. As the OSD signals generated by each of the processors are different from each other, there is no uniformity between them. Also, the resolution and brightness of the OSD is dependent upon the processor's performance, thereby the OSD may be displayed at different qualities.

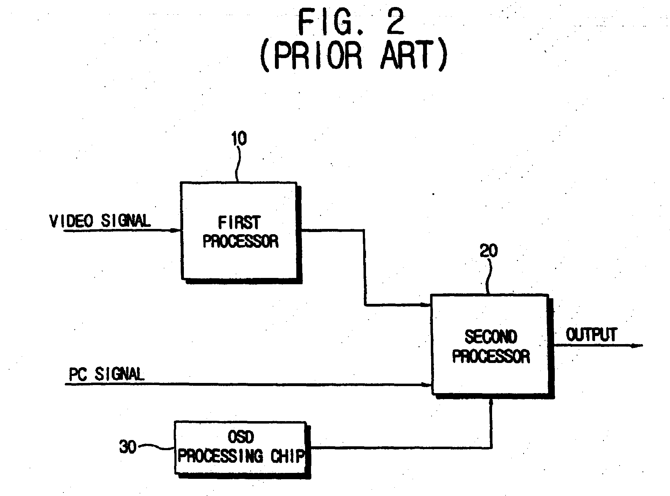

Figure 2 is a control block diagram of another conventional display apparatus to solve the problem of the OSD generation of the display apparatus in Figure 1. As shown therein, a display apparatus comprises a first processor 10, a second processor 20, and an OSD processing chip 30.

The first processor 10 processes an externally input video signal, and outputs the processed video signal to the second processor 20. The video signal may be input to the second processor 20 after being processed as a final predetermined format to be displayed, or may be input to the second processor 20 to be scaled.

If a command to generate the OSD signal is received, the OSD processing chip 30 generates the OSD signal and outputs it to the second processor 20.

The second processor 20 mixes an input PC signal, or the video signal output from the first processor 10, with the OSD signal generated from the OSD processing chip 30.

According to the control method which is set, the generated OSD signal and the video signal are mixed with each other by at least one processor. That is, the video signal and the PC signal may be mixed with the generated OSD signal either in the processor processing the video signal, the processor processing the PC signal, or in another processor.

The display apparatus illustrated in Figure 2 solves the problem of the display apparatus in Figure 1. However, the display apparatus in Figure 2 additionally employs the OSD processing chip 30 instead of employing the OSD generator comprised in the processor, thereby generating extra expense.

The present invention aims to address the above problems.

According to the invention, there is provided a display apparatus comprising a first processor for outputting an on-screen display OSD video signal including an OSD window, an OSD extractor for extracting the OSD window from the OSD video signal and a second processor for mixing an externally input video signal and the OSD window extracted by the OSD extractor, and for outputting a mixed signal.

The foregoing and/or other aspects of the present invention are achieved by providing a display apparatus comprising a first processor outputting an OSD video signal or a processed first video signal comprising an OSD window; an OSD extractor extracting the OSD window from the OSD video signal; and a second processor mixing an externally input second video signal and the OSD window extracted from the OSD extractor, and outputting the mixed signal.

According to an aspect of the present invention, the OSD extractor comprises a block determining position information on an area of an OSD window field from the OSD video signal output from the first processor, and a block extracting the OSD window from the OSD video signal by using the position information.

The foregoing and/or other aspects of the present invention are also achieved by providing a method of controlling a display apparatus comprising receiving an OSD input signal; outputting an OSD video signal comprising an OSD window from a first processor; extracting the OSD window from the OSD video signal output from the first processor; and mixing an externally input second video signal and the OSD window extracted from an OSD extractor, and outputting the mixed signal.

According to an aspect of the present invention, extracting the OSD window comprises determining position information on an area of the OSD window from the OSD video signal output from the first processor; and extracting the OSD window from the OSD video signal by using the position information.

Embodiments of the invention will now be described by way of example with reference to the accompanying drawings, in which:
Figure 1 is a control block diagram of a conventional display apparatus;
Figure 2 is a control block diagram of another conventional display apparatus;
Figure 3 is a control block diagram of an exemplary embodiment of a display apparatus according to the present invention; and
Figure 4 is a control flow chart of the display apparatus according to an exemplary embodiment of the present invention.

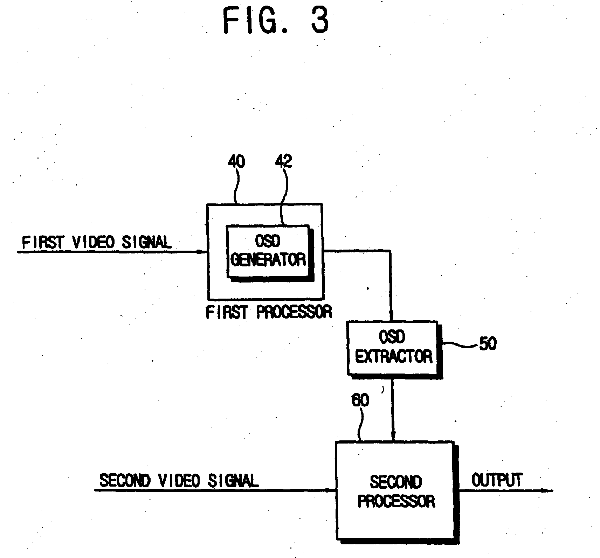

As shown in Figure 3, a display apparatus according to an exemplary embodiment of the present invention comprises a first processor 40 and a second processor 60 to process video signals in different formats and an OSD extractor 50.

The first processor 40 processes an externally input first video signal, and comprises an OSD generator 42. The first processor 40 comprises blocks for processing the first video signal, for example for converting an externally input analogue signal to a digital signal, decoding the first video signal in an encoded state, adjusting the processed first video signal into a predetermined resolution and colour sensation, etc., and processing the input first video signal into a predetermined format to be displayed.

When receiving an OSD input signal in order to generate an OSD signal while the first processor 40 processes the first video signal, the OSD generator 42 generates the OSD signal. The first processor 40 mixes the video signal processed by the first processor 40 with the OSD signal generated by the OSD generator 42, and outputs the processed first video signal comprising the OSD window. The processed first video signal output from the first processor 40 simply passes through the second processor 60 to form an output to be displayed. A function of video signal scaling may be realized in either the first processor 40 or the second processor 60, thus the first video signal may pass through the first processor 40 and scaling may be performed in the second processor 60.

The second processor 60 processes an externally input second video signal. As an exemplary embodiment of the present invention, the second video signal refers to a PC signal. The PC signal is different from the video signal received from a broadcasting station or generated from a video generating apparatus like a VTR in frequency band and resolution, therefore an extra processor is employed for processing it.

When receiving the OSD input signal while the second processor 60 processes the second video signal, the OSD generator 42 of the first processor 40 generates the OSD signal. At this time, the first processor 40 outputs an OSD video signal comprising the OSD signal, and the OSD video signal is input to the OSD extractor 50.

The OSD extractor 50 extracts an OSD window from the OSD video signal in one frame output from the first processor 40. The OSD extractor 50 comprises blocks for determining position information on an area of the OSD window from the OSD video signal in one frame output from the first processor 40, and for extracting the OSD window from the OSD video signal by using the position information. That is, after determining the position information on the OSD window area from the OSD video signal output from the first processor 40, the OSD extractor 50 extracts the OSD window from the OSD video signal in one frame by using the position information. Then, the second processor 60 mixes the second video signal processed by the second processor 60 and the OSD window supplied from the OSD extractor 50, and outputs the mixed signal.

According to characteristics of the second video signal, the second processor 60 mixes the second video signal input and the OSD window either before or after processing the second video signal. For example, if the second video signal input is an analogue signal, the second video signal goes through an A/D converting process before being mixed with the OSD position information as a digital signal. If the second video signal only requires a scaling to be displayed, the second video signal may be mixed with the OSD window extracted from the OSD extractor 50 to be processed into a predetermined format.

The OSD extractor 50 does not comprise an extra process element or a chip, but comprises a part of the functions of the second processor 60. As the processors are not provided with additional hardware for the OSD extractor 50, a configuration thereof is different from employing a conventional OSD processing chip 30.

An exemplary embodiment of the present invention may receive a video signal having a different format from the first and second video signals, and comprise at least one processor for processing such video signals. If the OSD window is required to be generated while the additional processor processes the video signal, it is possible to extract the OSD window generated from the first processor 40 to mix with the video signal inputted.

Also, the display apparatus according to an exemplary embodiment of the present invention may comprise a controller (not shown) to control reception of the OSD input signal to make the first processor 40 output an OSD video signal comprising the OSD window, extraction of the OSD window from the OSD video signal output from the OSD extractor 50, and the mixing of the second video signal and the OSD window in the second processor 60.

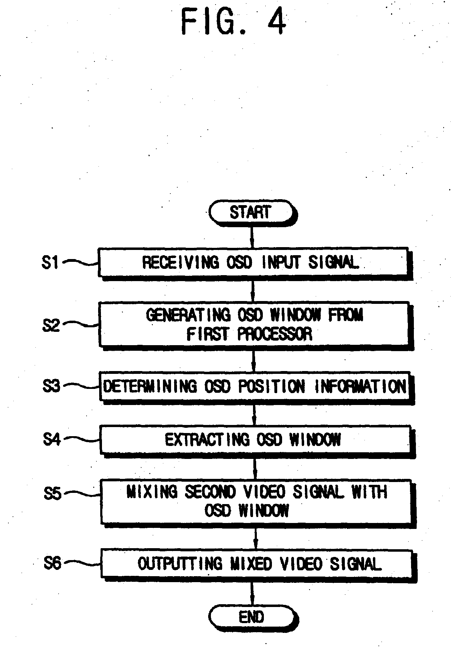

Figure 4 is a control flow chart of the display apparatus according to an exemplary embodiment of the present invention.

When receiving the OSD input signal at operation S1, the OSD generator 42 in the first processor 40 generates the OSD signal at operation S2. The OSD window according to the OSD signal generated by the OSD generator 42 is input to the second processor 60. At operation S3, the OSD extractor 50 determines the position information on the OSD window area from the OSD video signal output from the first processor 40, and extracts the OSD window from the position information at operation S4. At operation S5, the second processor 60 mixes the externally input second video signal and the OSD window extracted from the OSD extractor 50, and outputs the mixed signal at operation S6.

Although a few exemplary embodiments of the present invention have been shown and described, it will be appreciated by those skilled in the art that changes may be made in these exemplary embodiments without departing from the scope of the invention as defined in the appended claims.

## Claims

1. A display apparatus comprising:
a first processor for outputting an on-screen display OSD video signal including an OSD window;
an OSD extractor for extracting the OSD window from the OSD video signal; and
a second processor for mixing an externally input video signal and the OSD window extracted by the OSD extractor, and for outputting a mixed signal.

2. The display apparatus according to claim 1, wherein the display apparatus receives an OSD input signal.

3. The display apparatus according to claim 2, further comprising a controller for receiving the OSD input signal and controlling the first processor to output the OSD video signal.

4. The display apparatus according to claim 3, wherein the controller is arranged to control the OSD extractor to extract the OSD window from the OSD video signal.

5. The display apparatus according to claim 3 or 4, wherein the controller is arranged to control the second processor to mix the externally input video signal with the OSD window and to output a mixed signal.

6. The display apparatus according to any one of the preceding claims, wherein the OSD extractor comprises a block determining position information on an area of an OSD window field from the OSD video signal output from the first processor, and a block extracting the OSD window from the OSD video signal by using the position information.

7. The display apparatus according to any one of the preceding claims, wherein the OSD extractor is a part of the second processor.

8. A method of controlling a display apparatus comprising:
outputting a OSD video signal comprising an OSD window from a first processor;
extracting the OSD window from the OSD video signal output from the first processor; and
mixing an externally input video signal and the extracted OSD window, and outputting a mixed signal.

9. A method according to claim 8, further comprising receiving an on-screen display (OSD) input signal.

10. A method according to claim 8 or 9, wherein the step of extracting the OSD window comprises determining position information on an area of the OSD window from the OSD video signal output from the first processor; and extracting the OSD window from the OSD video signal by using the position information.
